# EUROPEAN PATENT SPECIFICATION

(11) **EP 4 475 486 B1**
(45) Date of publication and mention of the grant of the patent: **27.05.2026**
(21) Application number: 23382544.7
(22) Date of filing: 06.06.2023
(51) Int. Cl.: H04L 9/40, G06F 21/77, H04W 4/70, H04W 12/30

(54) **HARDWARE INDEPENDENT PROVISIONING OF CELLULAR IOT DEVICES**
HARDWAREUNABHÄNGIGE BEREITSTELLUNG VON IOT-MOBILFUNKGERÄTEN
FOURNITURE INDÉPENDANTE DU MATÉRIEL DE DISPOSITIFS IOT CELLULAIRES

(43) Date of publication of application: 11.12.2024
(73) Proprietor: Podsystem Limited, Buckingham MK18 1TF (GB)
(72) Inventor: Chertov, Kostiantyn, Buckingham, MK18 1TF (GB); Ontañon, Felix Jose, Buckingham, MK18 1TF (GB)
(74) Representative: LKGLOBAL Partnerschaftsgesellschaft mbB

(56) References cited:
- EP-A1- 3 565 191
- US-A1- 2020 186 365

## Description

The present invention relates to Zero Touch Provisioning of cellular IoT devices and, more particularly to a secure element, an IoT platform server and a system with extended functionalities for hardware agnostic provisioning of cellular IoT devices.

### BACKGROUND OF THE INVENTION

The Internet of things (IoT) describes physical objects with sensors, processing ability, software and other technologies that connect and exchange data with other IoT devices and systems over the Internet or other communications networks. IoT systems generally refer to the integrated use of telecommunications devices in embedded systems for transmitting, receiving, controlling, remotely storing and processing information.

IoT devices employ identity modules, such as a SIM card or any other secure element, for establishing connection to the host network and for transferring data between the IoT device and an IoT platform connected to the host network.

When a customer installs a new IoT device in their home or business, there is considerable effort for onboarding the device, that is, to configure the device so that the customer may exercise ownership of the device. For instance, in the case of a network-connected device, an essential group of configuration settings may need to be programmed so that the device may find its owner's network, and achieve secure connectivity. Conventionally, the user or administrator of the device would conduct a configuration process using a suitable user interface.

Recently, Zero Touch Provisioning (ZTP) solutions have been developed, where a handshake triggered when a device is powered on initiates onboarding and a subsequent automated provisioning process. Zero-Touch Provisioning is thus allowing fast configuration of new devices and their enrolment to network and cloud services.

Although existing ZTP solutions reduce significantly the manual labor and time for onboarding a device and subsequent management of each and every device, these solutions are based on device-dependent implementations, and hence are not agnostic with respect to the underlying device hardware. As a consequence, device manufacturers and firmware developers have to spent a significant amount of time to implement those solutions for each device.

Accordingly, there remains a need to provide a solution for provisioning of IoT devices which overcomes the above-mentioned drawbacks.

### SUMMARY OF THE INVENTION

The present invention addresses the above object by the subject-matter covered by the independent claims. Preferred embodiments of the invention are defined in the dependent claims.

According to a first aspect of the present invention, there is provided a secure element, SE, for use in a IoT device. The SE comprises a zero-touch-provisioning, ZTP, client for communicating with an IoT platform server, a first interface to the IoT device, and a second interface to the IoT platform server. The ZTP client is configured to retrieve via the second interface data from the IoT platform server and to provide via the first interface the data to the IoT device.

Recently, Zero Touch Provisioning (ZTP) solutions have been developed, where a handshake triggered when a device is powered on initiates onboarding and a subsequent automated provisioning process. Zero-Touch Provisioning is thus allowing fast configuration of new devices and their enrolment to network and cloud services.

US 2020/186365A1 deals with zero-touch provisioning of devices at scale using device configuration templates by device type, a secure element, a provisioning wizard, a provisioning client, an enrollment client, an update client, an enrollment service, an update publisher service, signing and encryption certificates, a method including generating device configuration templates for enrollment and update by device type, sending device configuration templates signed with a device owner signing certificate, and a device owner encryption certificate to the device manufacturer, generating a device configuration for a device based on the device configuration templates using a secure element on the device for immutable device identity, an extended configuration for the device, signing the device configuration with a device manufacturer signing certificate and a secure element signing certificate, encrypting the doubly signed device configuration with an owner encryption certificate, configuring bootstrap metadata, and configuring the device provisioning client to autostart at power-on for device enrollment and update.

EP 3 565 191 A1 refers to methods for provisioning and managing Internet-of-Things (IoT) devices over a network using device based tunneled nodes. The method includes receiving, by a first network device in a network, data originated from an Internet-of-Things (IoT) device; identifying a device type of the IoT device by analyzing data packets of the received data; obtaining, by the first network device, a device profile for the IoT device, wherein the device profile is used for provisioning the IoT device to access the network; and provisioning the IoT device using the device profile, wherein the provisioning includes at least one of (1) identifying a tunneling attribute in the device profile; and (2) identifying a constrained application protocol (CoAP) parameter in the device profile, wherein the CoAP parameter is used to zero touch provision one or more device attributes of the IoT device.

Although existing ZTP solutions reduce significantly the manual labor and time for onboarding a device and subsequent management of each and every device, these solutions are based on device-dependent implementations, and hence are not agnostic with respect to the underlying device hardware. As a consequence, device manufacturers and firmware developers have to spent a significant amount of time to implement those solutions for each device.

Accordingly, there remains a need to provide a solution for provisioning of IoT devices which overcomes the above-mentioned drawbacks.

### SUMMARY OF THE INVENTION

The present invention addresses the above object by the subject-matter covered by the independent claims. Preferred embodiments of the invention are defined in the dependent claims.

According to a first aspect of the present invention, there is provided a secure element, SE, for use in a IoT device. The SE comprises a zero-touch-provisioning, ZTP, client for communicating with an IoT platform server, a first interface to the IoT device, and a second interface to the IoT platform server. The ZTP client is configured to retrieve via the second interface data from the IoT platform server and to provide via the first interface the data to the IoT device.

By embedding a secure element (or a SIM card) card with a ZTP agent, and the therewith achieved extended functionality of the SE, an efficient, hardware-agnostic solution for zero touch provisioning of IoT devices is provided. As the ZTP client resides within the SE, a solution independent of the underlying device HW is possible, increasing compatibility of the provisioning solution across devices from different vendors.

The expression "data" refers generally to configuration settings for the IoT device, in particular to actual HW of the device.

Preferably, the first interface and the second interface are provided through applets comprised within the secure element. That is, the secure element may comprise a set of at least one applet, whereas both interfaces are comprised within the same applet, that is, provided by the same applet. Alternatively, different applets may be used for providing the interfaces independent of each other. That is, a first applet from the set of applets may implement the first interface, while a second applet may implement the second interface.

In some embodiments of the present invention, the secure element comprises a memory configured to store an address of the IoT platform server.

In some embodiments of the present invention, the address of the IoT platform server is being stored during SE personalization. Preferably, the SE is configured to update the address of the IoT platform server via over-the-air OTA secure commands.

This provides a dynamic and flexible solution that allows runtime switching between various IoT platforms and related infrastructure capabilities. An IoT platform is an on-premises software suite or a cloud service that monitors and may manage and control various types of endpoints, often via applications units deploy on the platform. The IoT platform usually provides (or provisions) Web-scale infrastructure capabilities to support basic and advanced IoT solutions.

In some embodiments of the present invention, the SE is further configured to store pre-shared-keys, PSK, for securing a data communication channel with the IoT platform server. Preferably, the second SE interface is configured to manage the pre-shared-keys.

Storing the PSK within the SE, allows the SE to be used for securing the data communication channel between the SE and the IoT device, respectively the IoT platform server. Hence, the functionality of the SE is extended to be used by the device as a co-processor for both cryptography and connectivity. The device developers do not have to deal with PSKs and cryptographic algorithms anymore, as these functionality is embedded within the SE.

In some embodiments of the present invention, the second SE interface is configured to encapsulate a multi-protocol implementation for client-server requests to the IoT platform server.

This achieves a further lever of flexibility for IoT devices in terms of connectivity as several communication protocols are supported.

Preferably, the client-server requests are processed via a Transport Layer Security, TLS, session. This allows for implementing a secure data exchange between the SE and the IoT platform server.

In some embodiments of the present invention, the second SE interface is configured to implement a job queue, in particular a last-in-first-out, LIFO, queue for processing multiple requests.

In some embodiments of the present invention, the first SE interface is configured to encapsulate attention, AT, commands for communication with the IoT device.

This allows the SE/SIM card itself to embed all the logic to retrieve settings from a device management platform (via the IoT platform server). The only requirement for a device developer is to execute standard AT commands and to remain listening to the SE/SIM to return the configuration settings (i.e., data) for the device.

In some embodiments of the present invention, the first SE interface comprises application logic for automating device onboarding and zero touch provisioning of the IoT device.

According to a second aspect of the present invention, there is provided an IoT platform server for secure-element-based zero touch provisioning of an IoT device. The IoT platform server comprises a security application to communicate securely with a secure element, SE, preferably the secure element according to the first aspect, and an application server for processing and storing device data.

The IoT platform server is used to implement the cloud backend for supporting SIM-based zero touch provisioning of cellular IoT devices.

In some embodiments according to the second aspect, the security application is configured to process Transport Layer Security, TLS, sessions or to use a TLS proxy for processing TLS sessions.

This allows to secure data exchange between the SE and the IoT platform server.

In some embodiments according to the second aspect, the IoT platform server comprises ZTP settings for defining a configuration (or data) to be downloaded onto the IoT device when requested by the secure element. The ZTP settings comprise a plurality of matching rules, indicative of the ZTP setting applied by the IoT device, a base configuration, indicative of payload to be provided to the IoT device upon a ZTP request received from the secure element, and a status flag, for activating/deactivating the matching rules.

ZTP settings provide for an efficient mechanism to relate incoming requests from the first SE interface with the configuration data to be returned to the IoT device via the SE.

According to a third aspect of the present invention, there is provided a zero touch provisioning, ZTP, system for an IoT device, the system comprising a secure element, SE, comprising a zero-touch-provisioning, ZTP, client. The system comprises further an IoT platform server, and a device firmware library to provide a set of commands for being used by the IoT device for communication with the SE. The SE comprises a first interface to the IoT device, and a second interface to the IoT platform server. The ZTP client is configured to retrieve via the second interface data from the IoT platform server and to provide via the first interface the data to the IoT device.

Preferably, the SE of the ZTP system according to the third aspect is the SE according to the first aspect.

Preferably, the IoT platform server according to the third aspect is the IoT platform server according to the second aspect.

In some embodiments according to the third aspect, the device firmware library comprises commands for initializing a communication session between the IoT device and the SE, and commands for executing communication between the IoT device and the SE.

The device firmware library provides a collection of procedures for device firmware implementation to interact with the SE via AT-commands.

According to a fourth aspect of the present invention, there is provided a method for zero touch provisioning, ZTP, of an IoT device by a secure element, SE, the SE comprising a zero-touch-provisioning, ZTP, client, the method comprising: receiving from the IoT device a request for downloading data onto the IoT device, the request being received over a first interface; retrieving by the ZTP client the data from the IoT platform server over a second interface; and providing the data to the IoT device over the first interface.

In some embodiments according to the fourth aspect, the method comprises providing a state or a status indication to the IoT device upon receiving a status request from the IoT device.

It has to be noted that all the devices, elements, units and means described in the present application could be implemented in software or hardware elements or combination thereof. All steps which are performed by the various entities described in the present application as well as the described functionalities are intended to mean that the respective entity is adapted to or configured to perform the respective steps and functionalities.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which:
FIG. 1 shows a schematic representation of a Zero Touch Provisioning (ZTP) system according to the present invention;
FIG. 2 shows the logic diagram of an applet implementation within the ZTP system according to an embodiment of the present invention;
FIG. 3 shows the logic diagram of an applet implementation within the ZTP system according to another embodiment of the present invention;
FIG. 4 shows a flow diagram illustrating a method according to the present invention;
FIG. 5 shows a signaling diagram for illustrating an implementation of the method in Fig. 4 on the ZTP system in Fig. 1 according to an embodiment of the present invention;
FIG. 6 shows an implementation of an IoT platform server within the ZTP system according to an embodiment of the present invention; and
FIG. 7 shows an environment in which novel aspects disclosed herein may be used.

### DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

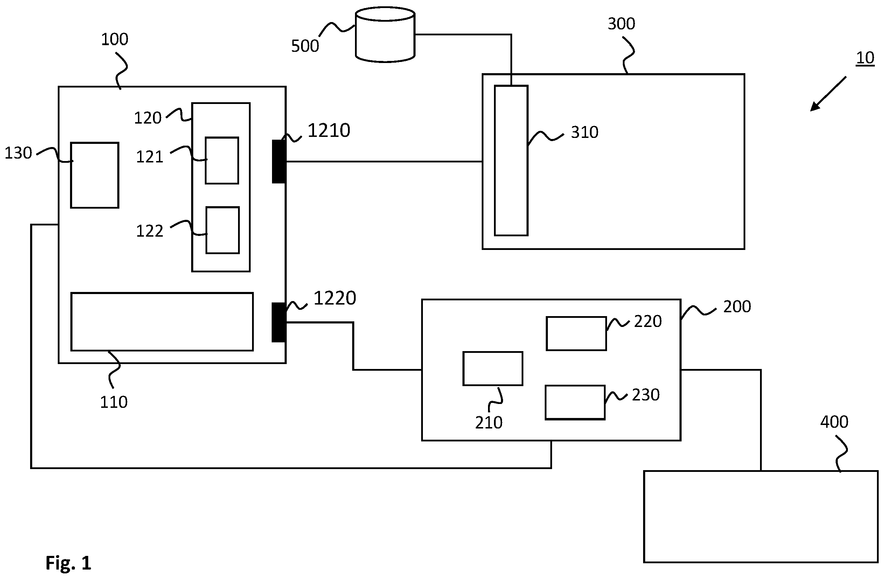

FIG. 1 shows a schematic representation of a Zero Touch Provisioning (ZTP) system 10 according to an embodiment the present invention.

The system 10 comprises several entities, most notably, a secure element (or SIM card) 100, an IoT platform server 200, and a IoT device 300. The secure element 100, which is located within the IoT device 300, has a full Zero Touch Provisioning, ZTP, client 110, to communicate with the IoT platform server 200 to automatically retrieve data needed for onboarding the IoT device 300. The IoT platform server 200 may obtain the data from a device management platform 400. The expression "data" refers generally to settings and configurations of the IoT device, such as the actual hardware of the IoT device.

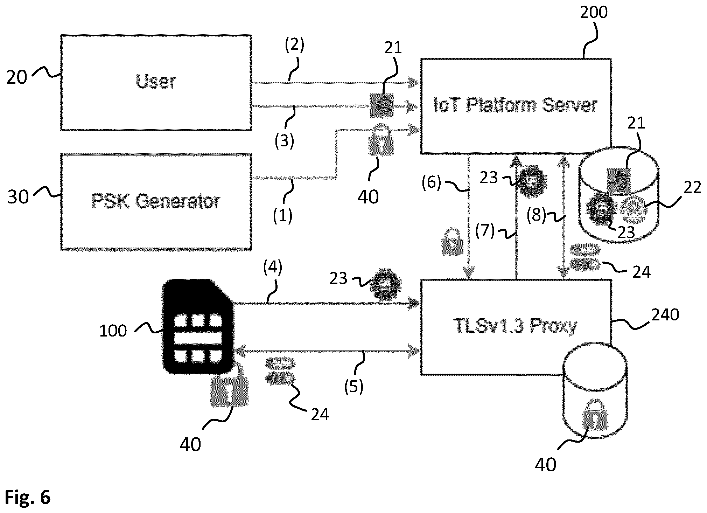

The IoT platform server 200 may contain security applications to process TLS1.3 sessions (or optionally use a TLS1.3 proxy, in case the IoT platform server does not implement/support TLS1.3) and an application server to process and store device data. The IoT platform server 200 will be described in details further below in connection with Fig. 6.

Data communication between the secure element 100 and the IoT device 300 respectively the IoT platform server 200 may be implemented by means of SE (or SIM) applets 120 stored at the SE 100. That is, the SE 100 comprises a set 120 of at least one applet 121, for providing or implementing interfaces to the IoT device 300 and the IoT platform server 200. The set of applets is stored in a memory 130 of the secure element. The memory 130 may contain both volatile and non-volatile memory modules. According to one embodiment the SE 100 may comprise a first SE applet 121 for providing a first interface 1210 to the IoT device 300, and a second SE applet 122 for providing a second interface 1220 to the IoT platform server 200. Alternatively, according to another embodiment, the first interface and the second interface may be provided through the same applet 121 or 122.

The address of the IoT platform server 200 is stored in the secure element 100 during the personalization phase. The address is stored in the memory 130, preferably in the same file containing the set of SE applets 120. The stored address of the IoT platform server may be updated during the SE life cycle via over-the-air (OTA) secure commands. The SE applets support Domain Name System (DNS) resolving, hence various address types are allowed, such as for instance an IPv4 or an URL address. In addition, further information such as destination port and HTTP endpoint may be stored together with the IoT platform server address at the SE 100.

In addition to embedding the ZTP client 110 into the SE 100, the SE 100 is used as a storage for Pre-Shared-Keys (PSKs). A PSK is used with symmetric cryptography methods along with cipher and message authentication code algorithms to secure the data communication channel. Preferably, the second SE interface 1220 (through the corresponding SE applet) is in charge of managing the PSKs.

Storing the PSKs within the SE allows the SE to be used as a processor for cryptographic security applications, reducing thus the burden on the device developers in ensuring device security.

The SE applets 120 according to the present invention are thus embedded software for secure elements or SIM cards to (i) store pre-shared keys, (ii) execute requests towards the IoT platform server 200, and (iii) present an AT-command interface to the IoT device 300. These functionalities can be implemented within a single applet or distributed through various applets.

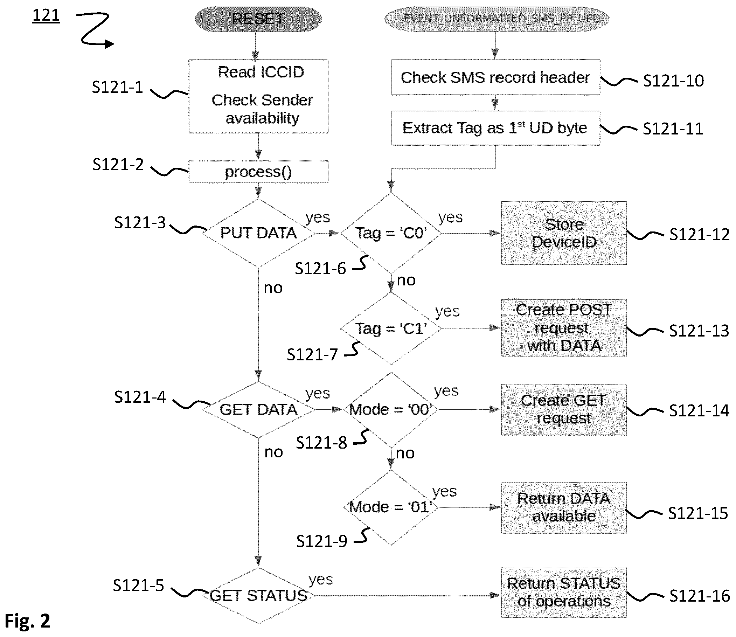

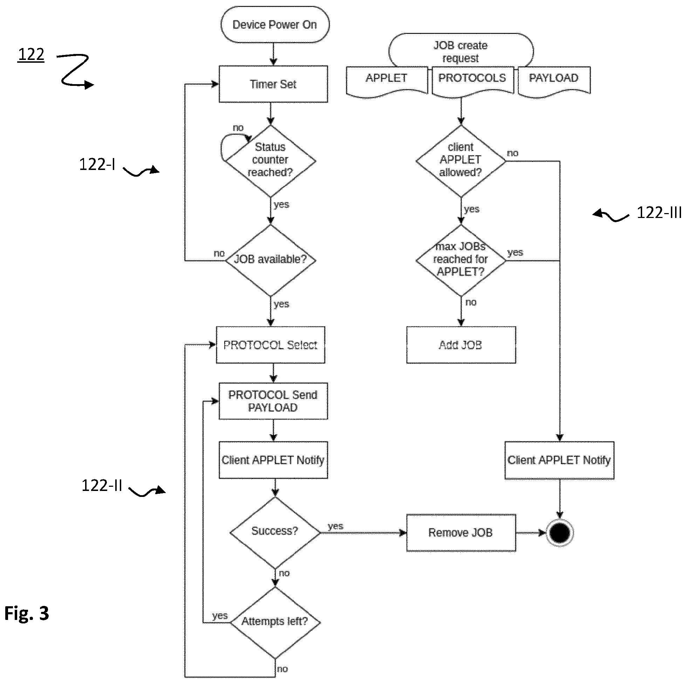

In the following, with reference to Figures 2 and 3, two embodiments of the SE applets 120 are presented for exchanging data between the IoT device 300 and the SE applets, respectively between the IoT platform server 200 and the SE applets.

Fig. 2 shows the logic diagram of a IoT SAFE2 Applet as an implementation embodiment of the first SE applet 121, which provides the first interface 1210 towards the IoT device 300.

The IoT SAFE2 Applet encapsulates the AT-commands interface to the IoT device, plus application logic used for features as Automatic Device Onboarding and Zero Touch Provisioning. It is a client application to the second SE applet 122, as will be described further below with reference to Fig. 3. The first SE applet 121 installs its own configuration files to declare IoT platform server address and endpoints.

Preferably, the first SE applet 121 implements the steps illustrated in Fig. 2. In a first step S121-1, the first SE applet 121 receives a request from the IoT device 300, reads the IoT device ID, that is, the Integrated Circuit Card Identification Number, ICCID, and checks whether the sender (i.e., the IoT device 300) is available.

The request is received in form of an AT command ("Attention" command). AT commands are a short text command language used for achieving connection between a modem and hardware for IoT networks.

The request is processed in step S121-2 and depending on the request type (that is, the AT command, e.g. PUT DATA, GET DATA, GET STATUS) different branches of the flow diagram are processed leading to different actions. Further to the request, an event is received at the first SE applet 121 from the second SE applet 122. This event is received preferably in form of an SMS, on which a check of the SMS record header is performed in step S121-10, whereas in step S121-11 the Tag value is extracted from the header.

The first SE applet 121 implements the following actions for exchanging data with the IoT device 300, depending on the type of the request processed in step S121-2 and/or the Tag value extracted in step S121-11. In particular:
- If the PUT DATA request has been received and the Tag value is 'C0' (S121-6) the device ID is stored at the first SE applet (respectively in the SE memory 130) in step S121-12.
- If the PUT DATA request has been received and the Tag value is 'C1' (S121-7) a "POST request with DATA" is created by the first SE applet in step S121-13. This request is being received at the second SE applet 122.
- If a GET DATA request has been received, the first SE applet checks in step S121-8 whether "Mode="00'", and if this is the case, a GET request is created in step S121-14, towards the second SE applet 122.
- If a GET DATA request has been received and "Mode="01'", available DATA is returned to the IoT device 300 in step S121-15.
- If a GET STATUS request has been received, the first SE applet returns in step S121-16 the STATUS of operations to the IoT device 300.

Fig. 3 shows the logic diagram of a Multi-Protocol Sender Applet as an implementation embodiment of the second SE applet 122.

The Multi-Protocol Sender Applet (i.e., second SE applet) 122 encapsulates a multi-protocol implementation (section 122-II in Fig. 3) for client-server requests to the IoT platform server 200 (i.e., a remote server), in particular, a multi-protocol implementation for PUT and GET requests. The processing of the requests is constrained by timing constraints and job availability (section 122-I in Fig. 3).

The second SE applet 122 implements its own job queue, so multiple requests received from the first SE applet 121 (e.g., created by the first SE applet in steps S121-13 and S121-14 of Fig. 2) can be queued (section 122-III in Fig. 3) and processed in a received order. The queue is used to keep list of pending jobs to be processed, and it has the ability to retry failed jobs. Various queues structures may be supported, such as FIFO (first-in first-out) or LIFO (last-in first-out).

Furthermore, the second SE applet 122 supports SMS delivery as a failsafe mechanism, so client applets (i.e., the first SE applet 121) can declare SMS as a fallback option. Access Point Name (APN) for data connection can also be personalized by the client applet.

The second SE applet 122 notifies the first SE applet 121 (i.e., the client applet in Fig. 3) once the payload contained the requested data has been sent, whereafter the corresponding job is removed from the job queue (c.f., section 122-II).

Furthermore, the second SE applet 122 sends a corresponding notification to the first SE applet or client applet 121, in case the client applet is not allowed or if the maximal number of jobs allowable for the client applet has been reached (c.f., phase section 122-III).

In addition, the Multi-Protocol Sender Applet / SE applet 122, is further responsible for managing the Pre-Shared Keys. Further, the second applet 122 supports the UDP protocol (for DNS resolution) as well as TCP requests (as HTTP, HTTPS and MQTT).

Fig. 2 and Fig. 3 show embodiments of implementations for providing the first and the second interfaces to the IoT device respectively the IoT platform server through separate applets. Alternatively, a single applet can implement both functionalities, that is, the first interface 1210 to the IoT device 300 as well as the second interface 1220 to the IoT platform server 200.

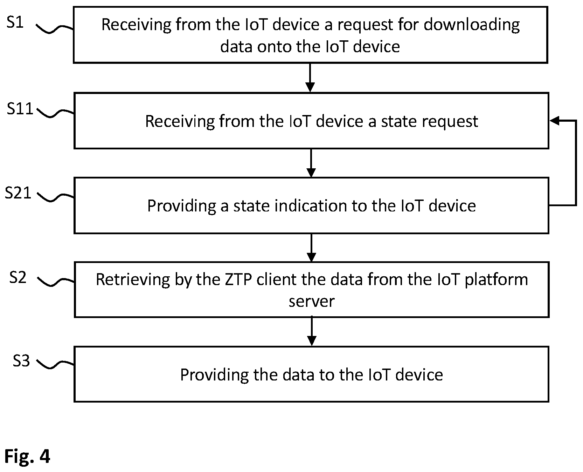

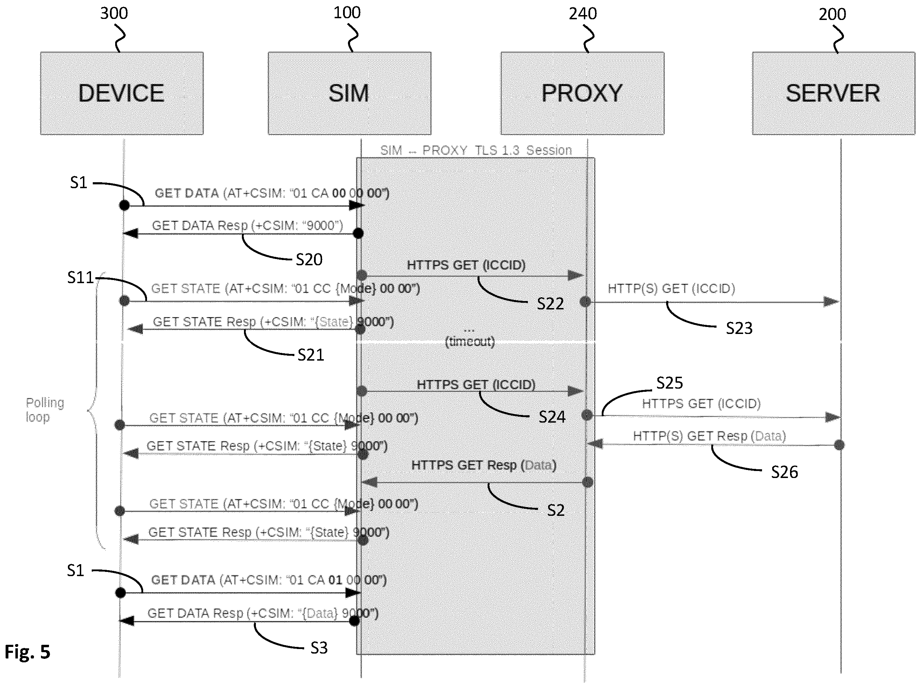

Fig. 4 shows a flow diagram illustrating a method according to the present invention. Fig. 5 shows a signaling diagram for illustrating an implementation of the method in Fig. 4 on the ZTP system in Fig. 1 according to an embodiment of the present invention.

With reference to Fig. 4, a method for zero touch provisioning of an IoT device (e.g., IoT device 300 in Fig. 1) by a secure element, SE (e.g., SE 100 in Fig. 1) is described in the following.

In a first step S1, a request sent by an IoT device 300 for downloading data onto the IoT device is received at the SE 100. Specifically, the request is received over the first interface 1210 provided by an applet of the SE, for instance the first SE applet 121 at the SE 100.

In a step S2, the SE ZTP client 110 retrieves the data from the IoT platform server 200 over the second interface 1220 via the same applet 121 or via the second SE applet 122.

Finally, in step S3 the retrieved data is providing to the IoT device 300 over the first interface 1210 by means of the corresponding applet (e.g., the first SE applet 121).

In addition to providing data to the IoT device, the SE may report in step S12 a state (or status) of the SE to the IoT device upon receiving a state request in step S11. The state of the SE refers to the resource presence of the SE and may be selected from a set comprising at least {new, ready, active, inactive, scheduled} to indicate whether the SE is able to allow its host device 300 to access the network.

Fig. 5 illustrates a detailed implementation of the method steps of Fig. 4 within the ZTP system of Fig. 1, according to an embodiment.

The entities involved are the IoT device 300, the SE 100, the IoT platform server 200 and the proxy 240. It is noted that in this embodiment the IoT platform server 200 does not have the capability to directly implement TLS1.3, hence the proxy 240 is used. In case of an IoT platform server supporting TLS1.3 the secure element or SIM 100 will communicate directly with the server 200 without the intermediary of the proxy 240.

With reference to Fig. 5, a request for data is received at the SE/SIM 100 from the device 300 in step S1. This step corresponds to step S1 from Fig. 4. Preferably, the GET DATA request to the SE/SIM is implemented via the AT command AT+CSIM: "01 CA 00 00 00".

The IoT device 300 keeps requesting a state indication from the SE/SIM by repeatedly polling the SE/SIM 100 in step S11 until the SE/SIM notifies the device of its availability state. The SE/SIM 100 retrieves the data from the IoT platform server 200, respectively through the intermediary of the proxy 240, by sending in step S23 an HTTPS GET request to the server 200 respectively proxy 240 (step S22), the request indicating the ICCID of the IoT device 300. If a timeout has expired without the SE/SIM receiving the data from the IoT platform server 200, it sends a further HTTPS GET request (step S24). The data is received from the IoT platform server 200 (through the proxy 240) at the SE/SIM 100 in step S2. The SE/SIM 100 is now able to provide the data to the IoT device in step S3, preferably upon receiving a further GET DATA request from the IoT device 300.

In the embodiment in Fig. 5 the proxy 240 is used to access the IoT platform server 200. In this case, further messages are exchanged between the proxy 240 and the server 200, most notably in steps S23, S25 and S26, to retrieve the data pertaining to the device identified by the ICCID in step S23. In cases were no proxy is needed, the SE/SIM 100 communicates directly with the server 200 by means of HTTPS messages in steps S22, S24 and S2.

FIG. 6 shows an implementation of an IoT platform server within the ZTP system 10 of Fig. 1 according to an embodiment of the present invention. The presented preferred implementation extends a conventional IoT platform server with structural and functional features to support SIM-based Zero Touch Provisioning and Automatic Device Onboarding.

As described above in connection with Fig. 5, the IoT platform server 200 communicates with the SE/SIM 100 either directly or by intermediary of a proxy 240 supporting the TLS 1.3 protocol.

Preferably, the IoT platform server 200 is configured for:
- PSK Provisioning (1) and (6): Sets SIM PSK on IoT Platform, so SIM can communicate via API.
   The PSKs (Pre-Shared Keys) 40 used for securing the communication channel are generated by a PSK generator 30 and provided (1) to the IoT server platform 200. The PSKs are provided, after device onboarding, via the TLS 1.3 proxy 240 to the SE/SIM 100 (c.f., PSK provisioning (6)).
- Customer Onboarding (2): Allowing the user/customer to enable ZTP. This functionality creates a customer account 22 at the IoT platform server 200.
- ZTP Settings (or device Profiles Creation) (3): The ZTP settings 21 received from the customer 20 are stored at the IoT platform server 200, and allow the customer to define the device configuration 24 to be downloaded when the SE/SIM 100 requests it.
- Device Onboarding (4) and (7): SE/SIM 100 will automatically report Device Identification (ICCID), so a new device 23 is added to the customer Device Manager section automatically. Onboarding may create a digital twin of the device 23 at the IoT platform server 200.
- Device Zero Touch Provisioning (5) and (8): The actual incoming request from SE/SIM 100 to download the device configuration 24 as defined on the ZTP Settings 21.

The ZTP SETTINGS (device Profiles) has three elements:
(A) matchingRules: A series of rules to identify whether a new device will apply this ZTP Settings or another.
(B) baseConfig: the payload the device will download upon a ZTP requests.
(C) status: can be enabled or disabled. When disabled, the matchingRules will not be considered to match devices upon SAFE2 Applet /GET ZTP Config request.

Thus, ZTP SETTINGS is a mechanism to relate an incoming IoT SAFE2 Applet (i.e, first SE applet 121) request with a baseConfig to return to the device 300.

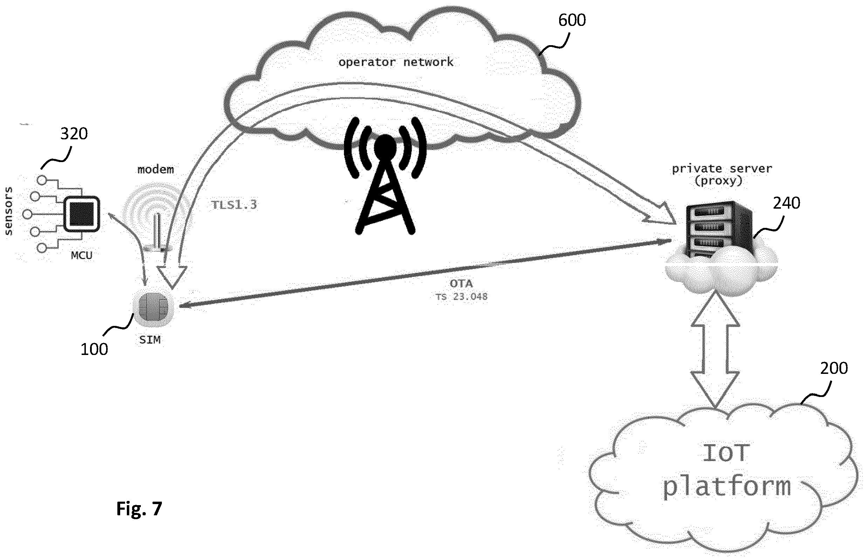

Fig. 7 illustrates an environment in which aspects according to embodiments presented above may be used. A wirelessly connected device (such as the IoT device 300 of Fig. 1) contains a SIM card or secure element, SE, 100, which is revised and improved according to aspects disclosed herein, with PSK storage capabilities and augmented functionality as a ZTP client.

The SIM/SE 100 communicates with an IoT platform (the IoT platform server 200) via a wireless network 600, possibly through the intermediary of a private server, functioning as a proxy 240. A direct communication between the SE 100 and the IoT platform server 200 is possible, provided that the IoT platform server 200 is configured accordingly, as for instance to support the TLS 1.3 protocol. In addition, the SE 100 may communicate with the IoT platform server 200 respectively the proxy 240 via an over-the-air OTA interface. Over this interface the SE is able to receive the IoT platform server's 200 address.

Fig. 7 shows further a plurality of sensors 320, the IoT device is equipped with, that detect and measure various physical characteristics.

The methods and apparatus as described through the embodiments above, provides a SE/SIM card that embeds all the logic to retrieve settings from a device management platform, respectively an IoT platform server. The only requirement for a device developer is to execute standard AT commands and to remain listening the SE/SIM to return the configuration settings for the device.

To support device firmware developers to interact with the set of SE applets 120 via an AT-commands interface (i.e., the first interface 1210), a device firmware library 500 (Fig. 1) is provided according to a further embodiment of the present invention.

The device firmware library 500, as part of the ZTP system 10 of Fig. 1, provides a collection of practice for device firmware implementation 310 within the IoT device 300.

From the IoT device application point of view a preferred usage scenario contains two phases - initialization and execution.

Initialization covers the steps:
(1) waiting for modem start;
(2) waiting for a network registration;
(3) providing the DeviceID (ICCID) to the (first) SE applet 121 over the first interface 1210.

Typical steps during execution are:
(1) opening data pipe to the TLS proxy 240;
(2) establishing TLS session;
(3) sending request to the IoT platform server 200;
(4) receiving configuration/control response from the IoT platform server 200;
(5) closing the session.

Typically, the initialization phase happens once during the start of the IoT device 300 and execution phase repeats according to the device logic.

The proposed secure element, IoT platform server, ZTP system, and provisioning method as described through the embodiments above, implement hardware-independent provisioning of cellular IoT devices. There is no need to implement specific HW solutions leading thus to faster onboarding and zero touch provisioning of IoT devices and better use of device resources.

Notable advantages include:
- Extended SE/SIM functionality by embedding a full ZTP client on the SE/SIM and as storage for PSKs. This simplifies device implementation, as device developers do not need to deal with the PSK and/or cryptographic algorithms themselves, but instead use these functionalities as provided by the SE by only invoking standard AT commands.
- Increased device compatibility: devices, even from different vendors, can implement the same ZTP solution, when fitted with the SE according to the present invention.
- Better usage of device resources: the SE/SIM card serves the device as a co-processor for cryptography and connectivity. Thus, device resources in terms of memory, storage and computational power are freed and can be used by device developers for other purposes, as well as cheaper IoT HW may be used to implement the same function.

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A secure element, SE, (100) for use in a IoT device (300), the SE (100) comprising:
- a zero-touch-provisioning, ZTP, client (110) for communicating with an IoT platform server (200);
- a first interface (1210) to the IoT device (200); and
- a second interface (1220) to the IoT platform server (300);
- wherein the ZTP client (110) is configured to retrieve via the second interface (1220) data from the IoT platform server (300) and to provide via the first interface (1210) the data to the IoT device (300).

2. The secure element (100) according to claim 1, further comprising a memory (130) configured to store an address of the IoT platform server (200).

3. The secure element (100) according to claim 2, wherein the address of the IoT platform server (200) is being stored during SE personalization, wherein the SE is configured to update the address via over-the-air, OTA, secure commands.

4. The secure element (100) according to claim 2 or 3, wherein the memory (130) is further configured to store pre-shared-keys, PSK, for securing a data communication channel with the IoT platform server, wherein the second interface (1220) is configured to manage the pre-shared-keys.

5. The secure element (100) according to any one of the preceding claims, wherein the second interface (1220) is configured to encapsulate a multi-protocol implementation for client-server requests to the IoT platform server (200), preferably via a Transport Layer Security, TLS, session.

6. The secure element (100) according to claim 5, wherein the second interface (1220) is configured to implement a job queue, in particular a last-in-first-out, LIFO, queue for processing multiple requests.

7. The secure element (100) according to any one of the preceding claims, wherein the first interface (1210) is configured to encapsulate attention, AT, commands for communication with the IoT device (300).

8. The secure element (100) according to any one of the preceding claims, wherein the first interface (1210) comprises application logic for automating device onboarding and zero touch provisioning of the IoT device (300).

9. An IoT platform server (200) for secure-element-based zero touch provisioning of an IoT device (300), the IoT platform server (200) comprising:
- a security application (210) for securely communicating with a secure element, SE, (100) according to any one of claims 1 to 8; and
- an application server (220) for processing and storing device data.

10. The IoT platform server (200) according to claim 9, wherein the security application (210) is configured to process Transport Layer Security, TLS, sessions or to use a TLS proxy for processing TLS sessions.

11. The IoT platform server (200) according to claim 9 or 10, further comprising ZTP settings (230) for defining a configuration to be downloaded onto the IoT device (300) when requested by the secure element (100), the ZTP settings (230) comprising:
- a plurality of matching rules, indicative of the ZTP setting applied by the IoT device (300);
- a base configuration, indicative of payload to be provided to the IoT device (300) upon a ZTP request received from the secure element (100); and
- a status flag, for activating/ deactivating the matching rules.

12. A zero touch provisioning, ZTP, system (10) for an IoT device (300), the system (10) comprising:
- a secure element, SE, in particular, the SE (100) according to any one of claims 1 to 8, comprising a zero-touch-provisioning, ZTP, client (110);
- an IoT platform server (200), in particular the IoT platform server according to any one of claims 9 to 11; and
- a device firmware library (500) to provide a set of commands (310) for being used by the IoT device (300) for communication with the SE (100);
- wherein the SE (100) comprises a first interface (1210) to the IoT device (300), and a second interface (1220) to the IoT platform server (200);
- wherein the ZTP client (110) is configured to retrieve via the second interface (1220) data from the IoT platform server (200) and to provide via the first interface (1210) the data to the IoT device (300).

13. The system (10) according to claim 12, wherein the device firmware library (500) comprises:
- commands for initializing a communication session between the IoT device (300) and the SE (100); and
- commands for executing communication between the IoT device (300) and the SE (100).

14. A method for zero touch provisioning, ZTP, of an IoT device (300) by a secure element, SE, (100) comprising a zero-touch-provisioning, ZTP, client (110), the method comprising:
- receiving (S1) from the IoT device (300) a request for downloading data onto the IoT device, the request being received over a first interface (1210) of the SE (100);
- retrieving (S2) by the ZTP client (110) the data from an IoT platform server (200) over a second interface (1220) of the SE (100); and
- providing (S3) the data to the IoT device (300) over the first interface (1210).

15. The method according to claim 14, further comprising providing (S21) a state of the SE (100) to the IoT device (300) upon receiving (S11) a state request from the IoT device (300).

## Patentansprüche

1. Ein sicheres Element, SE, (100) zur Verwendung in einem IoT-Gerät (300), wobei das SE (100) umfasst:
- einen zero-touch-provisioning-, ZTP-, Client (110) zur Kommunikation mit einem IoT-Plattformserver (200);
- eine erste Schnittstelle (1210) zu dem IoT-Gerät (200); und
- eine zweite Schnittstelle (1220) zum IoT-Plattform-Server (300);
- wobei der ZTP-Client (110) so konfiguriert ist, dass er über die zweite Schnittstelle (1220) Daten von dem IoT-Plattformserver (300) abruft und die Daten über die erste Schnittstelle (1210) an das IoT-Gerät (300) liefert.

2. Das sichere Element (100) nach Anspruch 1, ferner umfassend einen Speicher (130), der zum Speichern einer Adresse des IoT-Plattformservers (200) konfiguriert ist.

3. Das sichere Element (100) nach Anspruch 2, wobei die Adresse des IoT-Plattformservers (200) während einer SE-Personalisierung gespeichert wird, wobei das SE zur Aktualisierung der Adresse über sichere over-the-air-, OTA-, Befehle konfiguriert ist.

4. Das sichere Element (100) nach Anspruch 2 oder 3, wobei der Speicher (130) ferner konfiguriert ist, um Pre-Shared-Keys, PSK, zur Sicherung eines Datenkommunikationskanals mit dem IoT-Plattformserver zu speichern, wobei die zweite Schnittstelle (1220) konfiguriert ist, um die Pre-Shared-Keys zu verwalten.

5. Das sichere Element (100) nach einem der vorhergehenden Ansprüche, wobei die zweite Schnittstelle (1220) zum Einkapseln einer Multiprotokoll-Implementierung für Client-Server-Anfragen an den IoT-Plattform Server (200), vorzugsweise über eine Transport Layer Security-, TLS-, Sitzung, konfiguriert ist.

6. Das sichere Element (100) nach Anspruch 5, wobei die zweite Schnittstelle (1220) so konfiguriert ist, dass sie eine Auftragswarteschlange, insbesondere eine Last-in-First-out-Warteschlange, LIFO, zur Verarbeitung mehrerer Anfragen implementiert.

7. Das sichere Element (100) nach einem der vorangehenden Ansprüche, wobei die erste Schnittstelle (1210) konfiguriert ist, um Aufmerksamkeits-, AT-, Befehle für die Kommunikation mit dem IoT-Gerät (300) einzukapseln.

8. Das sichere Element (100) nach einem der vorhergehenden Ansprüche, wobei die erste Schnittstelle (1210) eine Anwendungslogik zur Automatisierung des Geräte-Onboardings und der Zero-Touch-Bereitstellung des IoT-Geräts (300) umfasst.

9. Ein IoT-Plattformserver (200) für eine auf einem sicheren Element basierende Zero-Touch-Bereitstellung eines IoT-Geräts (300), wobei der IoT-Plattformserver (200) umfasst:
- eine Sicherheitsanwendung (210) zur sicheren Kommunikation mit einem sicheren Element, SE, (100) nach einem der Ansprüche 1 bis 8; und
- einen Anwendungsserver (220) zur Verarbeitung und Speicherung von Gerätedaten.

10. Der IoT-Plattformserver (200) nach Anspruch 9, wobei die Sicherheitsanwendung (210) so konfiguriert ist, dass sie Transport Layer Security (TLS)-Sitzungen verarbeitet oder einen TLS-Proxy zur Verarbeitung von TLS-Sitzungen verwendet.

11. Der IoT-Plattformserver (200) nach Anspruch 9 oder 10, ferner umfassend ZTP-Einstellungen (230) zum Definieren einer Konfiguration, die auf das IoT-Gerät (300) heruntergeladen werden soll, wenn sie von dem sicheren Element (100) angefordert wird, wobei die ZTP-Einstellungen (230) umfassen:
- eine Vielzahl von Anpassungsregeln, die die von dem IoT-Gerät (300) angewendete ZTP-Einstellung angeben;
- eine Basiskonfiguration, die die Nutzlast angibt, die dem IoT-Gerät (300) bei einer vom sicheren Element (100) empfangenen ZTP-Anforderung bereitgestellt werden soll; und
- eine Statusflag zum Aktivieren/Deaktivieren der Anpassungsregeln.

12. Ein Zero-Touch-Provisioning-, ZTP, System (10) für ein IoT-Gerät (300), wobei das System (10) Folgendes umfasst:
- ein sicheres Element, SE, insbesondere das SE (100) nach einem der Ansprüche 1 bis 8, das einen Zero-Touch-Provisioning-, ZTP-, Client (110) umfasst;
- einen IoT-Plattformserver (200), insbesondere den IoT-Plattformserver nach einem der Ansprüche 9 bis 11; und
- eine Geräte-Firmware-Bibliothek (500), um einen Satz von Befehlen (310) bereitzustellen, die von dem IoT-Gerät (300) für die Kommunikation mit dem SE (100) verwendet werden;
- wobei das SE (100) eine erste Schnittstelle (1210) zu dem IoT-Gerät (300) und eine zweite Schnittstelle (1220) zu dem IoT-Plattformserver (200) umfasst;
- wobei der ZTP-Client (110) so konfiguriert ist, dass er über die zweite Schnittstelle (1220) Daten von dem IoT-Plattformserver (200) abruft und die Daten über die erste Schnittstelle (1210) an das IoT-Gerät (300) liefert.

13. Das System (10) nach Anspruch 12, wobei die Geräte-Firmware-Bibliothek (500) umfasst:
- Befehle zum Initialisieren einer Kommunikationssitzung zwischen dem IoT-Gerät (300) und dem SE (100); und
- Befehle zum Ausführen der Kommunikation zwischen dem IoT-Gerät (300) und dem SE (100).

14. Verfahren zur Zero-Touch-Provisionierung, ZTP, eines IoT-Geräts (300) durch ein sicheres Element, SE, (100), das einen Zero-Touch-Provisionierungs-, ZTP, Client (110) umfasst, wobei das Verfahren umfasst:
- Empfangen (S1) von dem IoT-Gerät (300) eine Anfrage zum Herunterladen von Daten auf das IoT-Gerät, wobei die Anfage über eine erste Schnittstelle (1210) des SE (100) empfangen wird;
- Abrufen (S2) der Daten von einem IoT-Plattformserver (200) durch den ZTP-Client (110) über eine zweite Schnittstelle (1220) des SE (100); und
- Bereitstellen (S3) der Daten an das IoT-Gerät (300) über die erste Schnittstelle (1210).

15. Verfahren nach Anspruch 14, ferner umfassend das Bereitstellen (S21) eines Zustands des SE (100) für das IoT-Gerät (300) beim Empfang (S11) einer Zustandsanforderung von dem IoT-Gerät (300).

## Revendications

1. Elément sécurisé, SE (100), destiné à être utilisé dans un dispositif IoT (300), le SE (100) comprenant :
- un client de provisionnement sans intervention, ZTP (110), pour communiquer avec un serveur de plateforme IoT (200) ;
- une première interface (1210) vers le dispositif IoT (200) ; et
- une deuxième interface (1220) vers le serveur de plateforme IoT (300) ;
- dans lequel le client ZTP (110) est configuré pour récupérer, via la deuxième interface (1220), des données depuis le serveur de plateforme IoT (300) et pour fournir, via la première interface (1210), les données au dispositif IoT (300).

2. Elément sécurisé (100) selon la revendication 1, comprenant en outre une mémoire (130) configurée pour mémoriser une adresse du serveur de plateforme IoT (200).

3. Elément sécurisé (100) selon la revendication 2, dans lequel l'adresse du serveur de plateforme IoT (200) est mémorisée lors de la personnalisation de l'élément sécurisé (SE), dans lequel le SE est configuré pour mettre à jour l'adresse via des commandes sécurisées OTA (over-the-air).

4. Elément sécurisé (100) selon la revendication 2 ou 3, dans lequel la mémoire (130) est en outre configurée pour mémoriser des clés pré-partagées, PSK, afin de sécuriser un canal de communication de données avec le serveur de plateforme IoT, dans lequel la deuxième interface (1220) est configurée pour gérer les clés pré-partagées.

5. Elément sécurisé (100) selon une quelconque des revendications précédentes, dans lequel la deuxième interface (1220) est configurée pour encapsuler une implémentation multi-protocoles pour les requêtes client-serveur adressées au serveur de plateforme IoT (200), de préférence via une session TLS (sécurité de couche de transport).

6. Elément sécurisé (100) selon la revendication 5, dans lequel la deuxième interface (1220) est configurée pour implémenter une file d'attente de tâches, notamment une file d'attente de type dernier entré, premier sorti (LIFO), pour le traitement de plusieurs requêtes.

7. Elément sécurisé (100) selon une quelconque des revendications précédentes, dans lequel la première interface (1210) est configurée pour encapsuler les commandes AT (attention) permettant la communication avec le dispositif IoT (300).

8. Elément sécurisé (100) selon une quelconque des revendications précédentes, dans lequel la première interface (1210) comprend une logique applicative pour l'automatisation de l'intégration et du provisionnement sans intervention du dispositif IoT (300).

9. Serveur de plateforme IoT (200) pour la fourniture sans intervention d'un dispositif IoT (300) basée sur un élément sécurisé, le serveur de plateforme IoT (200) comprenant :
- une application de sécurité (210) permettant de communiquer de manière sécurisée avec un élément sécurisé, SE (100), conformément à une des revendications 1 à 8 ; et
- un serveur d'application (220) pour le traitement et la mémorisation des données du dispositif.

10. Serveur de plateforme IoT (200) selon la revendication 9, dans lequel l'application de sécurité (210) est configurée pour traiter les sessions de sécurité de couche de transport, TLS, ou pour utiliser un proxy TLS pour le traitement des sessions TLS.

11. Serveur de plateforme IoT (200) selon les revendications 9 ou 10, comprenant en outre des paramètres ZTP (230) permettant de définir une configuration à télécharger sur le dispositif IoT (300) à la demande de l'élément sécurisé (100), les paramètres ZTP (230) comprenant :
- plusieurs règles de correspondance, indiquant les paramètres ZTP appliqués par le dispositif IoT (300) ;
- une configuration de base, indiquant une charge utile à fournir au dispositif IoT (300) lors de la réception d'une requête ZTP provenant de l'élément sécurisé (100) ; et
- un indicateur de statut pour activer ou désactiver les règles de correspondance.

12. Système de provisionnement sans intervention, ZTP (10), pour un dispositif IoT (300), le système (10) comprenant :
- un élément sécurisé, SE, en particulier le SE (100 selon une quelconque des revendications 1 à 8, comprenant un client de provisionnement sans intervention, ZTP (110) ;
- un serveur de plateforme IoT (200), en particulier le serveur de plateforme IoT selon une quelconque des revendications 9 à 11 ; et
- une bibliothèque de micrologiciels du dispositif (500) fournissant un ensemble de commandes (310) utilisables par le dispositif IoT (300) pour communiquer avec le SE (100) ;
- dans lequel le SE (100) comprend une première interface (1210) vers le dispositif IoT (300) et une deuxième interface (1220) vers le serveur de plateforme IoT (200) ;
- dans lequel le client ZTP (110) est configuré pour récupérer, via la deuxième interface (1220), des données du serveur de plateforme IoT (200) et pour transmettre les données, via la première interface (1210), au dispositif IoT (300).

13. Système (10) selon la revendication 12, dans lequel la bibliothèque de micrologiciels du dispositif (500) comprend :
- des commandes pour initialiser une session de communication entre le dispositif IoT (300) et le SE (100) ; et
- des commandes pour exécuter la communication entre le dispositif IoT (300) et le SE (100).

14. Procédé de provisionnement sans intervention, ZTP d'un dispositif IoT (300) par un élément sécurisé (SE) (100) comprenant un client de provisionnement sans intervention, ZTP (110), le procédé comprenant :
- la réception (S1) depuis le dispositif IoT (300) d'une requête de téléchargement de données sur le dispositif IoT, la requête étant reçue via une première interface (1210) du SE (100) ;
- la récupération (S2) par le client ZTP (110) des données depuis un serveur de plateforme IoT (200) via une deuxième interface (1220) du SE (100) ; et
- la fourniture (S3) de données au dispositif IoT (300) via la première interface (1210).

15. Procédé selon la revendication 14, comprenant en outre la fourniture (S21) d'un état du SE (100) au dispositif IoT (300) lors de la réception (S11) d'une requête d'état provenant du dispositif IoT (300).
